# EUROPEAN PATENT APPLICATION

(11) **EP 2 474 417 A1**
(43) Date of publication of application: **11.07.2012**
(21) Application number: 10813620.1
(22) Date of filing: 18.08.2010
(51) Int. Cl.: B32B 37/00, B32B 3/22, B32B 43/00, E04B 1/80

(54) **SHEET STRUCTURE PRODUCTION DEVICE AND SHEET STRUCTURE PRODUCTION METHOD**

(30) Priority: 02.09.2009 JP 2009202782; 18.01.2010 JP 2010008228; 18.01.2010 JP 2010008229; 18.01.2010 JP 2010008230
(71) Applicant: Sekisui Techno Molding Co., Ltd., Minato-ku, Tokyo 105-0001 (JP)
(72) Inventor: GOTOH, Masahiko, Mishima-gun Osaka 618-0021 (JP); NAKATA, Yasushi, Mishima-gun Osaka 618-0021 (JP); MURAOKA, Hitomi, Mishima-gun Osaka 618-0021 (JP); NAKATA, Minoru, kyoto-shi Kyoto 601-8105 (JP)
(74) Representative: Merkle, Gebhard
(86) International application number: PCT/JP2010/063905
(87) International publication number: WO 2011/027669

(57) **Abstract**

Provided are a device for producing a sheet structure including a flexible sheet and a structure formed on the sheet whereby the sheet structure can be easily produced and a method for producing the sheet structure. The production device 1 includes: a table 10 having in a surface thereof a holding region 12; a formation mechanism 31 for forming a structure 2b; a holding mechanism 25 for holding a sheet 2a on the holding region 12; and a control unit 40. The holding mechanism 25 includes: porous materials 14b and 15b provided so that they are at least partly located within the holding region 12 and having interconnected cells; a negative--pressure generating mechanism 17; and a positive-pressure generating mechanism 20. The control unit 40 allows the negative-pressure generating mechanism 17 to generate a negative pressure to hold the sheet 2a, then allows the formation mechanism 31 to form the structure 2b, and then allows the positive-pressure generating mechanism 20 to generate a positive pressure.

## Description

### Technical Field

This invention relates to sheet structure production devices and sheet structure production methods and particularly relates to a device for producing a sheet structure including a flexible sheet and a structure formed on the sheet and a method for producing the sheet structure.

### Background Art

Various sheet structures including a flexible sheet and a structure formed on the sheet are conventionally known. A specific example of such a sheet structure is a light-transmitting and heat-insulating material as disclosed in the following Patent Literature 1.

The light- transmitting and heat-insulating material disclosed in Patent Literature 1 includes a base sheet having light permeability and a plurality of light-permeable sheets stacked on the base sheet, one light-permeable sheet spaced apart from another with resin spacers interposed therebetween. In the light- transmitting and heat-insulating material, the resin spacers and the light-permeable sheets constitute a structure formed on the base sheet.

### Citation List

### Patent Literature

Patent Literature 1: JP-A-2008-80783

### Summary of Invention

### Technical Problem

In producing such a sheet structure as the light-admitting and heat-insulating material described in Patent Literature 1, firstly a base sheet must be held on a table, as described in, for example, Patent Literature 1. Patent Literature 1 describes that the base sheet is held on the table by sticking positioning pins provided on the table into the base sheet.

In the method for holding the base sheet described in Patent Literature 1, however, portions of the base sheet in which the positioning pins have been stuck must be removed and thrown out later. Furthermore, when the positioning pins are stuck into the base sheet, the base sheet may deform.

For example, it is also conceivable as an alternative method for holding the sheet on the table to hold the base sheet on the table using two-sided adhesive tape. With this method, the base sheet is less likely to be damaged and need not be partly thrown out.

However, with the use of this double-faced adhesive tape, when a resultant sheet structure after the formation of a structure on the base sheet is peeled off from the table, the sheet structure may form wrinkles or the like. If, for example, the tackiness of the double-faced adhesive tape is lowered, it may be possible to reduce the formation of wrinkles or the like in the sheet structure upon peel-off. In this case, however, it will be difficult to reliably hold the base sheet on the table.

Furthermore, because the tackiness of the double-faced adhesive tape gradually decreases with use, the double-faced adhesive tape must be periodically replaced with a new one. Therefore, if the base sheet is held on the table using double-faced adhesive tape, this will make it difficult to produce a sheet structure.

The present invention has been made in view of the foregoing points, and an object thereof is to provide a device for producing a sheet structure including a flexible sheet and a structure formed on the sheet whereby the sheet structure can be easily produced and to provide a method for producing the sheet structure.

### Solution to Problem

A sheet structure production device according to the present invention is a device for producing a sheet structure including a flexible sheet and a structure formed on the sheet. The sheet structure production device according to the present invention includes a table, a formation mechanism, a holding mechanism, and a control unit. The table has in a surface thereof a holding region on which the sheet is to be held. The formation mechanism is a mechanism for forming the structure on the sheet held on the holding region. The holding mechanism is a mechanism for holding the sheet on the holding region. The holding mechanism includes a porous material, a negative-pressure generating mechanism, and a positive-pressure generating mechanism. The porous material is at least partly located within the holding region. The porous material is provided in the table so that a surface thereof is flush with the surface of the table. The porous material has interconnected cells. The negative-pressure generating mechanism is a mechanism for giving the porous material a negative pressure. The positive-pressure generating mechanism is a mechanism for giving the porous material a positive pressure. The control unit allows the negative-pressure generating mechanism to generate a negative pressure to hold the sheet, then allows the formation mechanism to form the structure, and then allows the positive-pressure generating mechanism to generate a positive pressure.

In a particular aspect of the sheet structure production device according to the present invention, the porous material includes: a first porous material at least partly disposed in a first end portion of the holding region located on one side thereof as viewed in a first direction; and a second porous material at least partly disposed in a second end portion of the holding region located on the other side thereof as viewed in the first direction. With this configuration, the sheet can be reliably held while the required amount of expensive porous material is reduced.

In another particular aspect of the sheet structure production device according to the present invention, each of the first and second porous materials has an elongated shape and is disposed along a second direction. With this configuration, the sheet can be more reliably held.

In another particular aspect of the sheet structure production device according to the present invention, the planed shape of the sheet is a rectangular shape whose longitudinal direction extends along the first direction, the first end portion is an end portion of the holding region on one side thereof as viewed in the lengthwise direction of the holding region, and the second end portion is an end portion of the holding region on the other side thereof as viewed in the lengthwise direction thereof.

In still another particular aspect of the sheet structure production device according to the present invention, the porous material further includes at least one of the third porous materials disposed in an area of the holding region located between the first end portion and the second end portion. With this configuration, the sheet can be even more reliably held.

In still another particular aspect of the sheet structure production device according to the present invention, the porous material is made of porous carbon. Therefore, the porous material has a high electrical conductivity. Hence, the sheet can be more effectively prevented from being charged with static electricity. Furthermore, the porous material has a lower hardness than metal, for example. Therefore, it can be more effectively prevented that the sheet is damaged by the porous material.

In still another particular aspect of the sheet structure production device according to the present invention, the porosity of the porous material is within the range of 10% to 50% by volume. Since the porosity of the porous material is not less than 10% by volume, higher suction power can be obtained, whereby the sheet can be more reliably held. Furthermore, since the porosity of the porous material is not more than 50% by volume, the sheet can be firmly held even if the sheet does not lie on the part of the porous material. In addition, the porous material can be increased in rigidity and hardness.

In still another particular aspect of the sheet structure production device according to the present invention, the sheet is a plastic sheet. In the case of using the plastic sheet, it is likely to be plastically deformed by the application of stress thereto. Therefore, the present invention is effective particularly in the case of using the plastic sheet.

In still another particular aspect of the sheet structure production device according to the present invention, the positive-pressure generating mechanism is a mechanism for supplying compressed ionized air to the porous material. In this case, in removing the sheet by the application of a positive pressure to the porous material, electrostatic charge of the sheet structure can be reliably reduced, so that the sheet can be more easily peeled off.

In still another particular aspect of the sheet structure production device according to the present invention, the porous material comprises several porous materials, and the several porous materials are arranged in a matrix pattern in the table. With this configuration, the sheet can be more reliably held.

In still another particular aspect of the sheet structure production device according to the present invention, the several porous materials are arranged in a matrix pattern having as basis vectors a first vector and a second vector inclined to the first vector. With this configuration, the sheet can be even more reliably held.

In yet still another particular aspect of the sheet structure production device according to the present invention, the flexible sheet is a plastic sheet, and the structure includes a plurality of the plastic sheets stacked one on top of another with a resin spacer interposed therebetween. The formation mechanism includes a discharge mechanism and a stacking mechanism. The discharge mechanism forms the resin spacer by discharging melted resin onto the resin sheet. The stacking mechanism stacks the plastic sheets, one above another on which the resin spacer is formed.

In yet still another particular aspect of the sheet structure production device according to the present invention, the formation mechanism further includes a temperature difference reducing mechanism. The temperature difference reducing mechanism reduces, prior to contact of the melted resin discharged from the discharge mechanism with the plastic sheet, the temperature difference between the melted resin and the plastic sheet onto which the melted resin is to be discharged by performing at least one of heating of the plastic sheet and cooling of the melted resin. With this configuration, the disorder in the flatness of the resin sheet can be prevented, whereby a sheet structure with a high aesthetic outlook can be produced.

In a different particular aspect of the sheet structure production device according to the present invention, the temperature difference reducing mechanism includes a cooling mechanism for cooling the melted resin.

In another different particular aspect of the sheet structure production device according to the present invention, the cooling mechanism is a cooling roll provided so that the melted resin discharged from the discharge mechanism comes into contact with the outer periphery of the cooling roll before coming into contact with the plastic sheet.

In another different particular aspect of the sheet structure production device according to the present invention, the outer periphery of the cooling roll has a carrying channel formed to extend along the circumferential direction of the cooling roll and carry the melted resin therethrough. With this configuration, the contact area between the cooling roll and the melted resin can be increased. Therefore, the melted resin can be efficiently cooled.

In still another different particular aspect of the sheet structure production device according to the present invention, the temperature difference reducing mechanism includes a heating mechanism for heating the plastic sheet onto which the melted resin is to be discharged.

In still another different particular aspect of the sheet structure production device according to the present invention, the heating mechanism is a hot-air blowing mechanism for blowing hot air onto the resin sheet onto which the melted resin is to be discharged.

In yet still another different particular aspect of the sheet structure production device according to the present invention, the sheet structure is a light-- collecting and heat-insulating material in which the several resin spacers are formed in parallel with each other and the plastic sheet is a light-permeable sheet. The sheet structure production device further includes a destaticizing mechanism for destaticizing the light-permeable sheet prior to the contact of the melted resin discharged from the discharge mechanism with the light-permeable sheet. With this configuration, it is effectively prevented that the melted resin fluctuates owing to static electricity charged on the light-permeable sheet. Therefore, straight-line resin spacers can be reliably formed, whereby the light-collecting and heat-insulating material can be produced with a high yield.

In yet still another different particular aspect of the sheet structure production device according to the present invention, the destaticizing mechanism includes an ionized-air blowing mechanism for blowing ionized air onto the light-permeable sheet.

In yet still another different particular aspect of the sheet structure production device according to the present invention, the ionized-air blowing mechanism is configured to blow ionized air onto the light-permeable sheet prior to the contact of the light-permeable sheet fed from the stacking mechanism with the table. With this configuration, the light-permeable sheet can be destaticized prior to the contact of the light-permeable sheet with the table. Therefore, the light-permeable sheet can be held at an accurate position. Thus, the resin spacers can be formed at accurate positions with respect to the light-permeable sheet.

In yet still another different particular aspect of the sheet structure production device according to the present invention, the ionized-air blowing mechanism includes: a first ionized-air blowing mechanism for blowing ionized air onto one of the surfaces of the light-permeable sheet; and a second ionized-air blowing mechanism for blowing ionized air onto the other surface of the light-permeable sheet. With this configuration, the light-permeable sheet can be more reliably destaticized. Therefore, the melted resin can be more effectively prevented from fluctuating.

A sheet structure production method according to the present invention is concerned with a method for producing a sheet structure using the sheet structure production device according to the present invention. The sheet structure production method according to the present invention includes the steps of: holding the sheet on the holding region of the table by giving the porous material a negative pressure by means of the negative-pressure generating mechanism; with the sheet held on the holding region by giving the porous material the negative pressure by means of the negative-electrode generating mechanism, forming the structure on the held sheet by means of the formation mechanism to obtain the sheet structure; and while or after the porous material is given a positive pressure by the positive-pressure generating mechanism, removing the sheet structure from the table.

In a particular aspect of the sheet structure production method according to the present invention, the flexible sheet is a plastic sheet, and the structure includes the several plastic sheets stacked one on top of another with a resin spacer interposed therebetween. The step of forming the structure includes: a spacer forming step of forming the resin spacer by discharging melted resin onto the sheet; and a sheet stacking step of stacking the sheets, one above another on which the resin spacer is formed.

In another particular aspect of the sheet structure production method according to the present invention, in the spacer forming step and prior to contact of the discharged melted resin with the sheet, the temperature difference between the melted resin and the sheet onto which the melted resin is to be discharged is reduced by performing at least one of heating of the sheet and cooling of the melted resin.

In still another particular aspect of the sheet structure production method according to the present invention, the sheet structure is a light-admitting and heat-insulating material in which the several resin spacers are formed in parallel with each other and the plastic sheet is a light-permeable sheet. The step of forming the structure comprises forming the resin spacer by discharging the melted resin onto the light-permeable sheet after destaticizing the light--permeable sheet.

### Advantageous Effects of Invention

In the present invention, since the sheet is held using a porous material having interconnected cells, the sheet can be firmly held even if the sheet is misaligned with the holding region so that the sheet does not lie on part of the porous material. Therefore, the sheet can be easily held. Furthermore, by generating a positive pressure using the positive-pressure generating mechanism, the sheet can be easily removed from the table and the sheet can be prevented from deforming upon removal. Therefore, in the present invention, the sheet structure can be easily produced.

### Brief Description of Drawings

[Fig. 1] Fig. 1 is a schematic, partly enlarged, cross-sectional view of a light-transmitting and heat-insulating material.
[Fig. 2] Fig. 2 is a schematic block diagram of a sheet structure production device.
[Fig. 3] Fig. 3 is a schematic plan view of a table.
[Fig. 4] Fig. 4 is a schematic cross-sectional view taken along the line IV-IV in Fig. 3.
[Fig. 5] Fig. 5 is a schematic cross-sectional view taken along the line V-V in Fig. 3.
[Fig. 6] Fig. 6 is a schematic block diagram of the sheet structure production device for illustrating the step of holding a base sheet.
[Fig. 7] Fig. 7 is a schematic, partly enlarged block diagram of the sheet structure production device for illustrating the step of holding the base sheet.
[Fig. 8] Fig. 8 is a schematic, partly enlarged block diagram of the sheet structure production device for illustrating the step of holding the base sheet.
[Fig. 9] Fig. 9 is a schematic, partly enlarged block diagram of the sheet structure production device for illustrating the step of holding the base sheet.
[Fig. 10] Fig. 10 is a schematic, partly enlarged block diagram of the sheet structure production device for illustrating the step of holding the base sheet.
[Fig. 11] Fig. 11 is a schematic, partly enlarged block diagram of the sheet structure production device for illustrating the step of forming resin spacers on the base sheet.
[Fig. 12] Fig. 12 is a schematic plan view of the base sheet on which the resin spacers are formed.
[Fig. 13] Fig. 13 is a schematic plan view of a table in a first modification.
[Fig. 14] Fig. 14 is a schematic planed view of a table in a second modification.
[Fig. 15] Fig. 15 is a schematic planed view of a table in a third modification.
[Fig. 16] Fig. 16 is a schematic block diagram of a sheet structure production device according to a second embodiment.
[Fig. 17] Fig. 17 is a schematic perspective view of a cooling roll in the second embodiment.
[Fig. 18] Fig. 18(a) is a time line chart showing the amount of melted resin discharged; and Fig. 18 (b) is a time line chart showing the pressure of a pressure pump.
[Fig. 19] Fig. 19 is a photograph in plan view of a light-transmitting and heat-insulating material produced in Example 1.
[Fig. 20] Fig. 20 is a photograph in plan view of a light-transmitting and heat-insulating material produced in Example 2.
[Fig. 21] Fig. 21 is a photograph in perspective view of a light-transmitting and heat-insulating material produced in Example 3.
[Fig. 22] Fig. 22 is a photograph in plan view of a light-transmitting and heat-insulating material produced in Example 4.

### Description of Embodiments

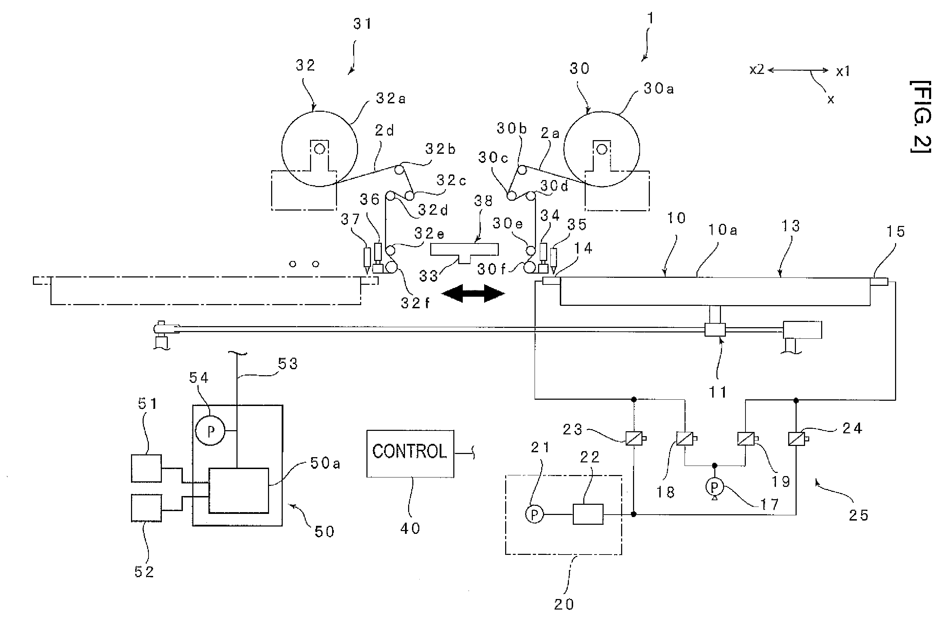

Hereinafter, a preferred embodiment of the present invention will be described taking as an example a production device 1 shown in Fig. 2. The production device 1 of this embodiment is a device for producing a light-transmitting and heat-insulating material which is a type of sheet structure. However, the sheet structure production device according to the present invention may be a device for producing a sheet structure other than the light- transmitting and heat-insulating material. No particular limitation is placed on the structure formed on the sheet; for example, the structure may be formed integrally with the sheet. In other words, the structure may be one formed on the sheet by processing, such as pressing or etching. More specifically, the sheet structure production device according to the present invention may be a device for producing, for example, an optical sheet, such as a lens array sheet or a polarizing sheet, or a flexible wiring board.

### (Light- transmitting and Heat-Insulating Material 2)

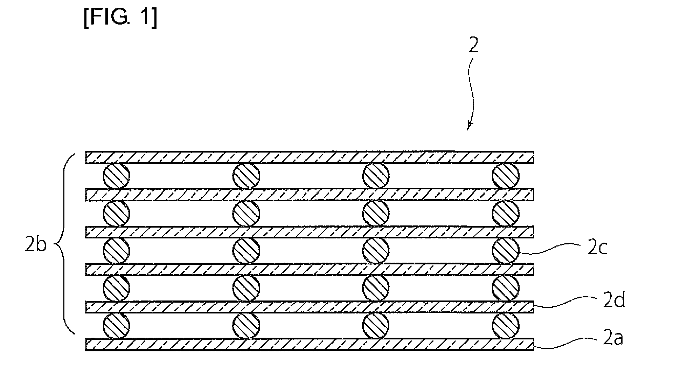

First, prior to the description of the production device 1 of this embodiment shown in Fig. 2, a description is given of a light- transmitting and heat-insulating material 2 produced by the production device 1 with reference to Fig. 1. As shown in Fig. 1, the light-admitting and heat-insulating material 2 includes a rectangular base sheet 2a. A structure 2b is formed on the base sheet 2a. The structure 2b includes resin spacers 2c and a plurality of sheets 2d stacked on the base sheet 2a and spaced one apart from another with each given number of resin spacers 2c interposed therebetween. The sheets 2a and 2d are each composed of a plastic sheet having light permeability and flexibility. This light-transmitting and heat-insulating material 2 can achieve a high heat insulating effect since air layers are formed between the adjacent sheets 2a and 2d by the resin spacers 2c.

In this embodiment, the base sheet 2a is formed in an elongated shape. Specifically, the base sheet 2a is formed in an elongated shape measuring 50 cm to 2m in width and 2 m to 5 m in length. However, in the present invention, no particular limitation is placed on the shape and size of the base sheet. For example, the base sheet may be ellipsoidal, circular, oval, or polygonal.

Furthermore, the sheets 2a and 2d are not particularly limited so long as they are flexible sheets; for example, they may be sheets made of a material other than resin.

### (Production Device 1)

Next, a description is given of the production device 1 for the light- transmitting and heat--insulating material 2 with reference to Figs. 2 to 5. As shown in Fig. 2, the production device 1 includes a table 10. The table 10 is mounted on a drive mechanism 11. This drive mechanism 11 makes the table 10 movable in the direction x. No particular limitation is placed on the structure of the drive mechanism 11; for example, the drive mechanism 11 can be composed of a rail and a servo motor.

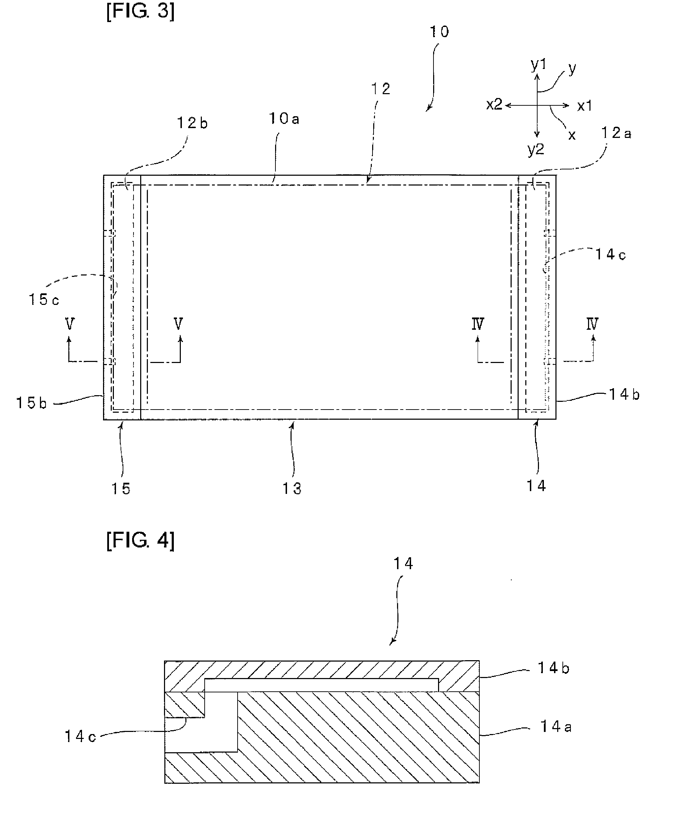

As shown in Fig. 3, the surface 10a of the table 10 is provided with a holding region 12 on which the base sheet 2a is to be held. In this embodiment, since the base sheet 2a is rectangular as described above, the holding region 12 is also rectangular. The lengthwise direction of the holding region 12 extends along the direction x (a first direction).

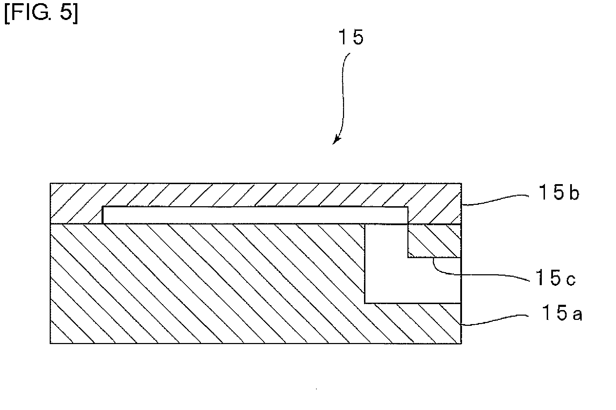

As shown in Figs. 2 and 3, the table 10 includes: a table body 13 connected to the drive mechanism 11; and rectangular first and second suction members 14 and 15 attached to the table body 13. As shown in Figs. 4 and 5, the suction members 14 and 15 include their respective suction member bodies 14a and 15a and their respective porous materials 14b and 15b provided on the suction member bodies 14a and 15a, respectively.

No particular limitation is placed on the material of the suction member bodies 14a and 15a; for example, they are made of a hard, low air permeability material, such as metal, alloy, or ceramics. More specifically, in this embodiment, the suction member bodies 14a and 15a are made of alumited Al.

As shown in Figs. 2 and 3, the porous materials 14b and 15b have an elongated shape. Specifically, the porous materials 14b and 15b are rectangular. The porous materials 14b and 15b are provided so that their surfaces are flush with the surface of the table body 13.

As shown in Fig. 3, the porous materials 14b and 15b are provided to be at least partly located within the holding region 12. Specifically, the porous material 14b is disposed to be at least partly located in a first end portion 12a of the holding region 12 located on the x1 side thereof as viewed in the direction x. The porous material 14b is disposed in the first end portion 12a along the direction y (a second direction).

The porous material 15b is disposed to be at least partly located in a second end portion 12b of the holding region 12 located on the x2 side thereof as viewed in the direction x. The porous material 15b is disposed in the first end portion 12a along the direction y.

The porous materials 14b and 15b are porous materials having interconnected cells. In this embodiment, the porous materials 14b and 15b are formed of porous carbon made essentially of carbon.

The porosity of the porous materials 14b and 15b is preferably within the range of 10% to 50% by volume and more preferably within the range of 30% to 40% by volume. The average pore size of the porous materials 14b and 15b is, for example, preferably about 1 µm to about 10 um and more preferably about 3 µm to about 7 um. The term "porosity" in the present invention refers to a porosity measured by Archimedes' method.

As shown in Figs. 4 and 5, the suction members 14 and 15 have their respective communication holes 14c and 15c connected to the back faces of the porous materials 14b and 15b. As shown in Fig. 2, these communication holes 14c and 15c are connected to a pressure reducing pump 17 serving as a negative-pressure generating mechanism for giving the porous materials 14b and 15b a negative pressure. Provided between the pressure reducing pump 17 and the porous materials 14b and 15b are solenoid valves 18 and 19, respectively. When these solenoid valves 18 and 19 are turned into open positions, a negative pressure can be given to the porous materials 14b and 15b. On the other hand, when the solenoid valves 18 and 19 are in closed positions, no negative pressure is given to the porous materials 14b and 15b .

The communication holes 14c and 15c are also connected to a positive-pressure generating mechanism 20 for giving the porous materials 14b and 15b a positive pressure. In this embodiment, this positive-pressure generating mechanism 20, the above porous materials 14b and 15b, and the above pressure reducing pump 17 serving as a negative-pressure generating mechanism constitute a holding mechanism 25 for holding the base sheet 2a on the holding region 12.

The positive-pressure generating mechanism 20 includes a compression pump 21 for supplying compressed air and an ion supply mechanism 22 disposed between the compression pump 21 and the communication holes 14c and 15c. This ion supply mechanism 22 supplies ions to the compressed air supplied from the compression pump 21. Therefore, in this embodiment, compressed ionized air is supplied from the positive-pressure generating mechanism 20 to the porous materials 14b and 15b.

Provided between the positive-pressure generating mechanism 20 and the communication holes 14c and 15c are solenoid valves 23 and 24, respectively. When these solenoid valves 23 and 24 are turned into open positions, compressed ionized air can be given to the porous materials 14b and 15b . On the other hand, when the solenoid valves 23 and 24 are in closed positions, no compressed ionized air is given to the porous materials 14b and 15b.

Furthermore, the production device 1 is provided with: a base sheet feeding mechanism 30 for feeding the base sheet 2a onto the table 10; and a formation mechanism 31 for forming the structure 2b. The base sheet feeding mechanism 30 includes a roll 30a on which the base sheet 2a is wound up, conveyor rolls 30b to 30f for conveying the base sheet 2a fed from the roll 30a, a suction mechanism 31, and a cutter 35.

The formation mechanism 31 includes: a sheet feeding mechanism 32 serving as a stacking mechanism for feeding the sheet 2d; and a discharge mechanism 38 including discharge nozzles 33 for discharging resin for the formation of the resin spacers 2c. The sheet feeding mechanism 32 includes a roll 32a on which the sheet 2d is wound up, conveyor rolls 32b to 32f for conveying the sheet 2d fed from the roll 32a, a suction mechanism 36, and a cutter 37.

The discharge mechanism 38 is a mechanism for discharging molten resin for the formation of the resin spacers 2c. The discharge mechanism 38 is connected to a hot melt machine 50 including a pressure pump 54 for pumping the molten resin. The molten resin is supplied from this hot melt machine 50 to the discharge mechanism 38. The hot melt machine 50 includes a melting chamber 50a for melting resin. The melting chamber 50a is connected to a pressure reducing mechanism 51 for reducing the pressure inside the melting chamber 50a and a gas supply mechanism 52 for supplying to the melting chamber 50a an inert gas, such as nitrogen or argon. These pressure reducing mechanism 51 and gas supply mechanism 52 bring the melting chamber 50a into a reduced-pressure inert gas atmosphere. This prevents oxidative degradation of the molten resin. In addition, a pipe 53 connecting the melting chamber 50a and the discharge mechanism 38 is made as short as possible. This also prevents oxidative degradation of the molten resin.

The production device 1 is also provided with a control unit 40. Although not shown, the control unit 40 is connected to each of the devices in the production device 1 to control the devices. Specifically, the control unit 40 allows the pressure reducing pump 17 to generate a negative pressure to hold the base sheet 2a on the holding region 12 of the table 10, then allows the formation mechanism 31 to form a structure 2b on the base sheet 2a, and then allows the positive-pressure generating mechanism 20 to generate a positive pressure to remove the base sheet 2a from the table 10.

### (Production of Light- transmitting and Heat-Insulating Material 2)

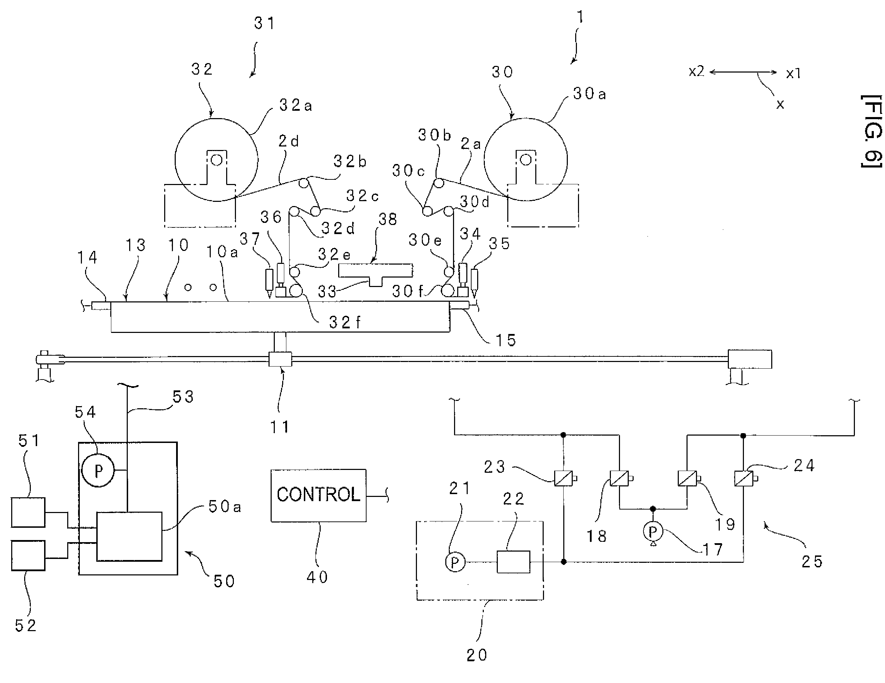

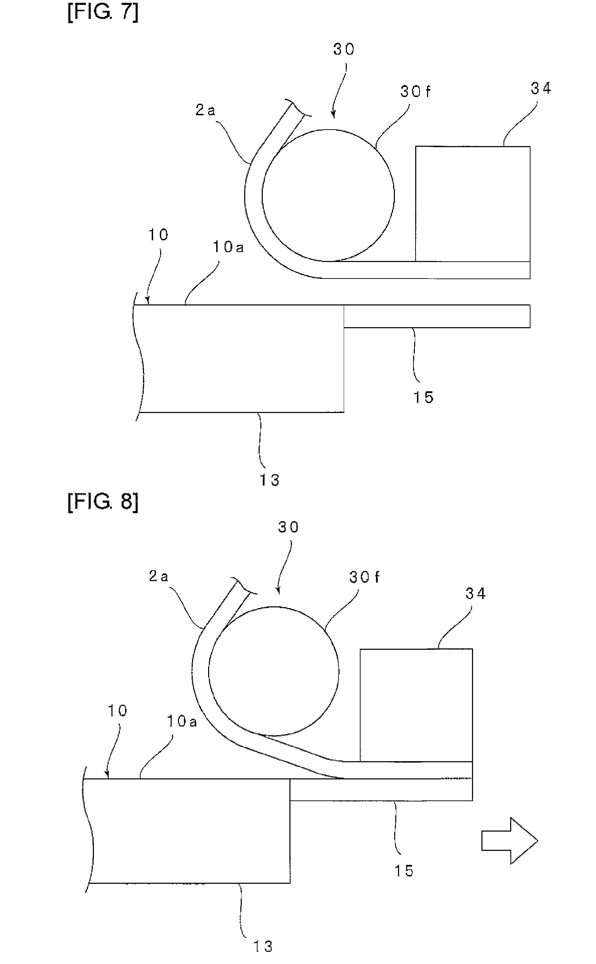

A description is next given of a process for producing the light- transmitting and heat-insulating material 2. First, the control unit 40 allows the drive mechanism 11 to move the table 10 from the position shown in Fig. 1 toward the x2 side as viewed in the direction x and to the position shown in Figs. 6 and 7. That is, the table 10 is moved until an x1 side end of the suction mechanism 34 as viewed in the direction x and an x1 side end of the porous material 15b as viewed in the direction x are at the same position in the direction x.

Next, as shown in Fig. 8, the control unit 40 moves down the suction mechanism 34 to bring an end portion of the base sheet 2a into close contact with the surface of the porous material 15b. Next, the control unit 40 breaks the suction of the suction mechanism 34 and turns the solenoid valve 24 shown in Fig. 2 into an open position to allow the porous material 15b to attract the end portion of the base sheet 2a.

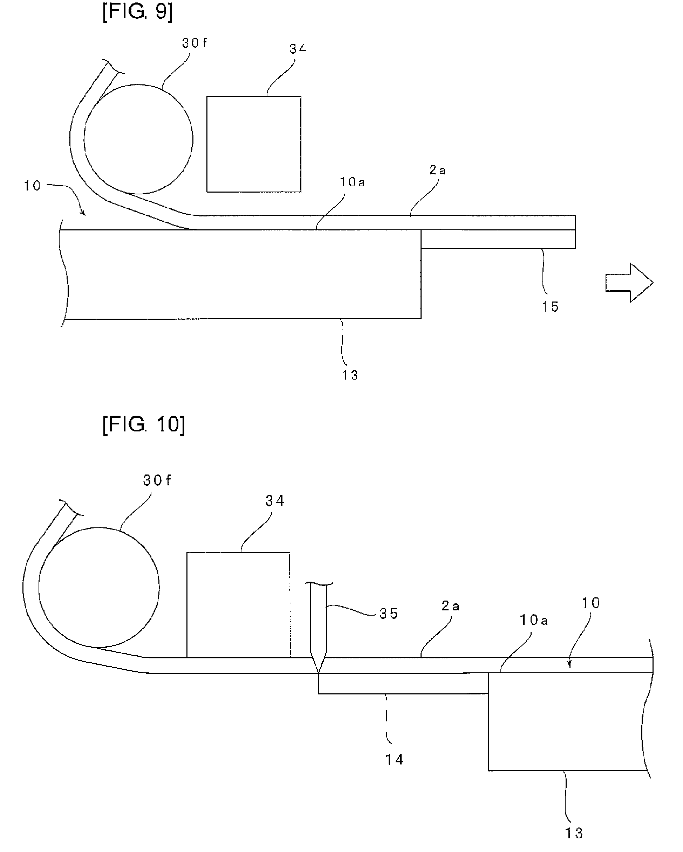

Next, the control unit 40 moves up the suction mechanism 34 to separate the suction mechanism 34 from the base sheet 2a. Thereafter, as shown in Fig. 9, the control unit 40 moves the table 10 toward the x1 side as viewed in the direction x. Then, when the base sheet 2a is fed to a point farther toward the x2 side as viewed in the direction x than an end of the porous material 14b of the table 10 located on the x2 side thereof, the control unit 40 stops the movement of the table 10. During the movement of the table 10 toward the x1 side as viewed in the direction x, a back tension may be applied to the roll 30a. Thus, the base sheet 2a can be effectively prevented from slacking.

Next, the control unit 40 turns the solenoid valve 23 into an open position to allow the porous material 14b to attract an end portion of the base sheet 2a. Thus, both of the x1 side end portion and x2 side end portion of the base sheet 2a are attracted to the holding region 12 shown in Fig. 3.

Next, as shown in Fig. 10, the control unit 40 moves down the suction mechanism 34 and allows the suction mechanism 34 to attract the x2 side end portion of the base sheet 2a. Thereafter, the control unit 40 moves down the cutter 35 to cut the base sheet 2a and then moves up the suction mechanism 34. Thus, the holding of the base sheet 2a on the table 10 is completed.

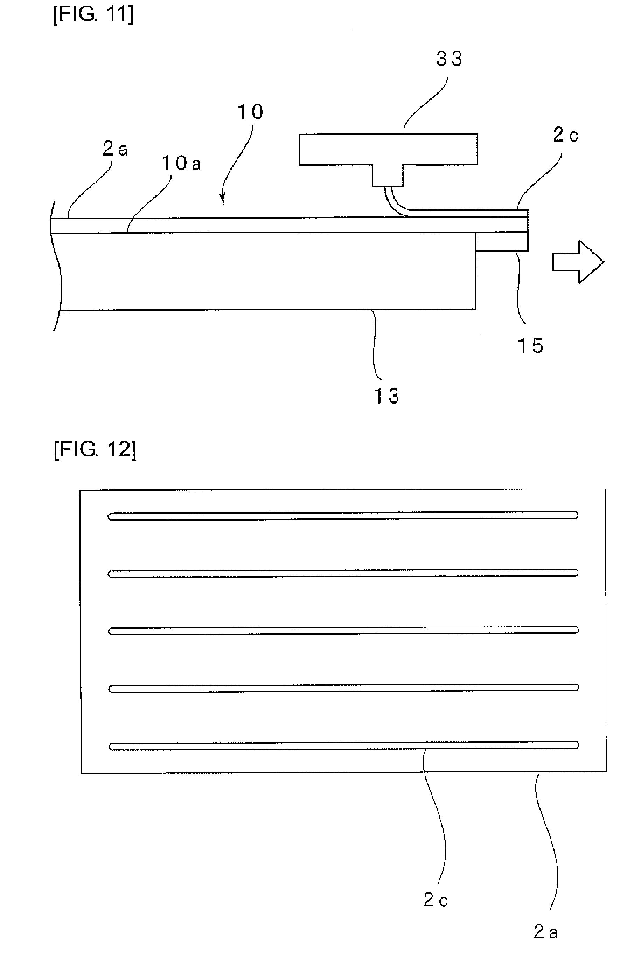

Next, the control unit 40 allows the drive mechanism 11 to move the table 10 until the x1 side end of the table 10 is located at a point farther toward the x2 side than the discharge nozzles 33. Subsequently, as shown in Fig. 11, the control unit 40 allows the discharge nozzles 33 to discharge resin onto the base sheet 2a while moving the table 10 toward the x1 side. Thus, as shown in Fig. 12, the several resin spacers 2c are formed on the base sheet 2a to extend in parallel with each other along the direction x.

Next, the sheet 2d fed from the roll 32a is placed over the base sheet 2a substantially in the same manner as the holding of the base sheet 2a on the table 10. Specifically, first, the control unit 40 moves the table 10 so that the x2 side end portion of the base sheet 2a held on the table 10 is located below the suction mechanism 36. Next, the control unit 40 moves down the suction mechanism 36 to allow the sheet 2d to adhere to the base sheet 2a through the resin spacers 2c. Thereafter, the control unit 40 allows the suction mechanism 36 to cancel the attraction of the sheet 2d and then moves up the suction mechanism 36. Subsequently, the control unit 40 moves the table 10 toward the x2 side, and upon the completion of the movement it allows the cutter 37 to cut the sheet 2d with the sheet 2d attracted by the suction mechanism 36, thereby completing the placement of the sheet 2d.

Subsequently, the formation of resin spacers 2c and the placement of the sheet 2d are repeated plural times to complete the light-admitting and heat-insulating material 2 shown in Fig. 1. Finally, the control unit 40 allows the positive-pressure generating mechanism 20 to supply compressed ionized air to the porous materials 14b and 15b. Thus, the attraction of the base sheet 2a made by the suction members 14 and 15 is cancelled. Thereafter, the light-admitting and heat-insulating material 2 is removed from the table 10.

As described so far, in this embodiment, the porous materials 14b and 15b are used for the purpose of holding the base sheet 2a. Therefore, even if, for example, the base sheet 2a is misaligned so that the surfaces of the porous materials 14b and 15b are partly uncovered by the base sheet 2a, the base sheet 2a can be reliably held.

From the viewpoint of more reliable holding of the base sheet 2a when the surfaces of the porous materialsl4b and 15b are partly uncovered by the base sheet 2a, the porosity of the porous materials 14b and 15b is preferably within the range of 10% to 50% by volume. If the porosity of the porous materials 14b and 15b is below 10% by volume, the magnitude of suction obtained will be small, whereby the base sheet 2a may not sufficiently firmly be held. On the other hand, if the porosity of the porous materials 14b and 15b is above 50% by volume, the magnitude of suction obtained when the surfaces of the porous materials 14b and 15b are entirely covered with the base sheet 2a will be large. However, the magnitude of suction obtained when the surfaces of the porous materials 14b and 15b are partly uncovered by the base sheet 2a will tend to be small. Thus, when the surfaces of the porous materials 14b and 15b are partly uncovered by the base sheet 2a, the base sheet 2a may not sufficiently firmly be held.

Furthermore, from the viewpoint of more reliable holding of the base sheet 2a when the surfaces of the porous materials 14b and 15b are partly uncovered by the base sheet 2a, the average pore size of the porous materials 14b and 15b is, for example, preferably about 1 µm to about 10 µm and more preferably about 3 µm to about 7 µm.

Moreover, in this embodiment, the base sheet 2a can be easily attached and detached unlike the case where the base sheet is held using both-sided adhesive tape. Therefore, the misalignment of the base sheet 2a can be easily corrected.

Furthermore, in this embodiment, prior to the removal of the light- transmitting and heat-insulating material 2 from the table 10, compressed ionized air is supplied from the positive-pressure generating mechanism 20 to the porous materials 14b and 15b. Thus, the attraction of the base sheet 2a made by the suction members 14 and 15 is cancelled. Therefore, the light- transmitting and heat-insulating material 2 can be easily removed and can be effectively prevented from deforming upon the removal thereof. Particularly in this embodiment, static electricity charged on the base sheet 2a can be effectively eliminated by the supply of ionized air. Therefore, the light-transmitting and heat-insulating material 2 can be more easily removed.

Consequently, through the use of the production device 1 of this embodiment, the light- transmitting and heat-insulating material 2 can be easily and stably produced.

Although this embodiment describes the case where compressed ionized air is supplied prior to the removal of the light- transmitting and heat-insulating material 2, the supply of compressed ionized air may be continued until the completion of removal of the light- transmitting and heat-insulating material 2.

In this embodiment, the porous materials 14b and 15b are made essentially of carbon. Therefore, the porous materials 14b and 15b have a high electrical conductivity. Hence, the base sheet 2a can be more effectively prevented from being charged with static electricity.

Furthermore, since the porous materials 14b and 15b are made essentially of carbon, they have a lower hardness than metal, for example. Therefore, it can be more effectively prevented that the base sheet 2a is damaged by the porous materials 14b and 15b.

A description will be given below of modifications of the above embodiment. In the following description, elements having functions substantially common to those of elements in the above embodiment are referred to by common reference numerals, and further explanation thereof will be accordingly omitted.

### (First to Third Modifications)

The above embodiment, as shown in Fig. 3, describes an example in which porous materials 14b and 15b are provided in both lengthwise end portions 12a and 12b, respectively, of the holding region. In the present invention, however, the arrangement of porous materials is not limited to that in the above embodiment.

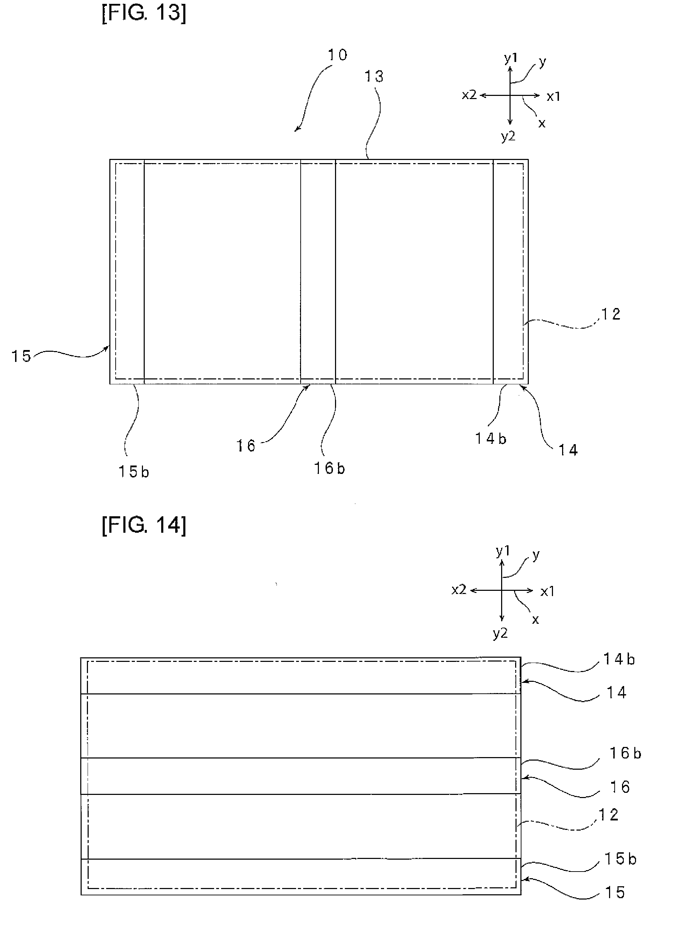

For example, as shown in Fig. 13, in addition to the porous materials 14b and 15b, a porous material 16b may be further provided in the middle of the table 10 in the direction x.

Alternatively, as shown in Fig. 14, porous materials 14b to 16b may be disposed to extend along the direction x and arrayed in the direction y. More specifically, the porous material 14b may be disposed in a y1 side end portion of the table 10 and along the direction x, the porous material 15b in a y2 side end portion of the table 10 and along the direction x, and the porous material 16b in the middle of the table 10 in the direction y and along the direction x.

Alternatively, a single porous material may be provided over the entire surface of the holding region 12.

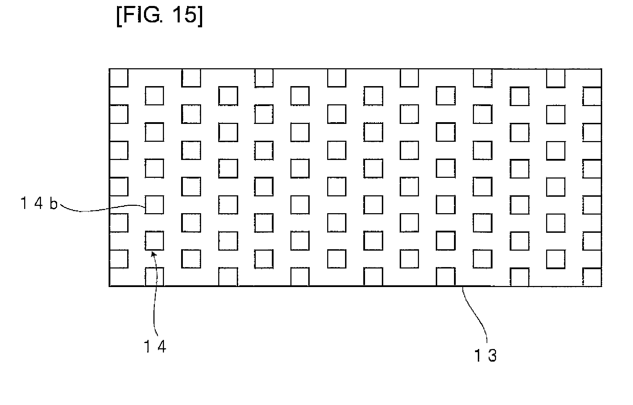

Alternatively, for example, as shown in Fig. 15, several porous materials 14b may be arranged in a matrix pattern in the table 10. In this case, the base sheet 2a can be held reliably so that the surface thereof can be flat.

Specifically, in an example shown in Fig. 15, the several porous materials 14b are arranged in a matrix pattern having as basis vectors a first vector V1 and a second vector V2 inclined to the first basis vector VI. In this case, the base sheet 2a can be held more reliably so that the surface thereof can be flat.

Particularly in this embodiment, the first vector VI is orthogonal to the direction x which is a feeding direction, the second vector V2 is inclined to the direction x, and the porous materials 14b are arranged evenly in both the directions x and y. Therefore, the base sheet 2a can be held still more reliably so that the surface thereof can be flat.

Hereinafter, another preferred embodiment of the present invention will be described. In the following description, elements having functions substantially common to those of elements in the above embodiment are referred to by common reference numerals, and further explanation thereof will be accordingly omitted.

### (Second Embodiment)

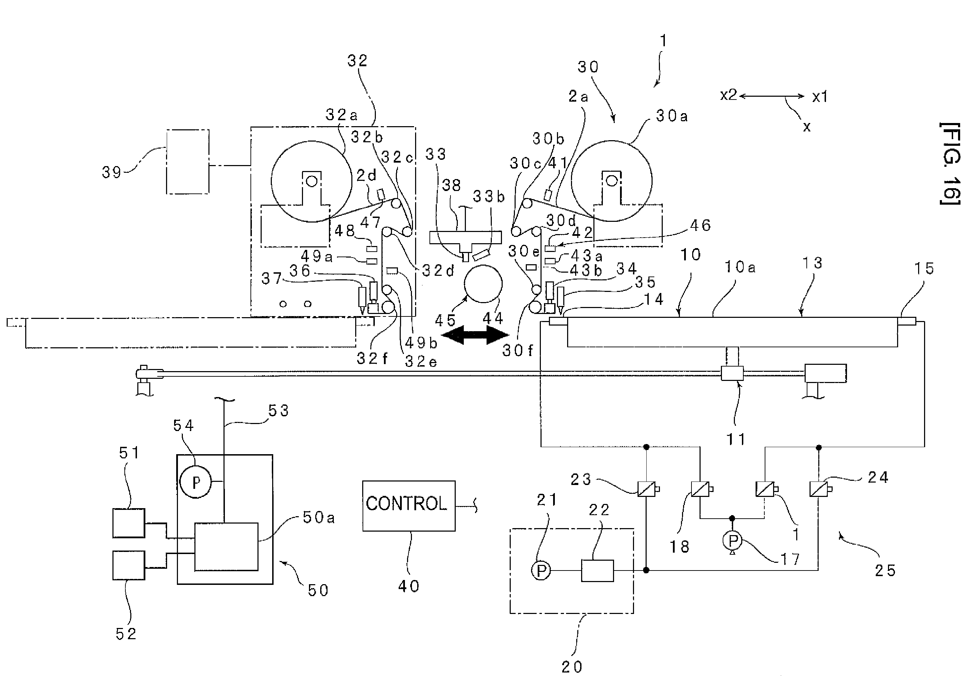

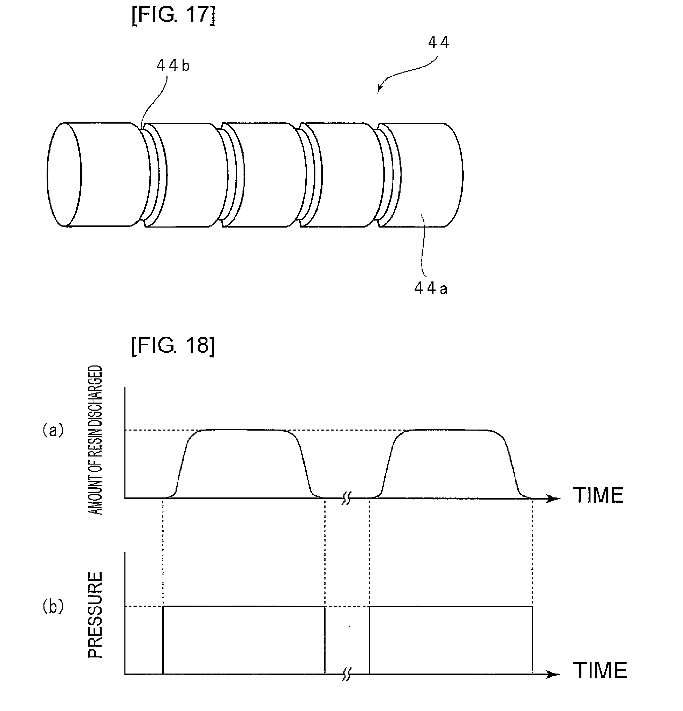

Fig. 16 is a schematic block diagram of a sheet structure production device according to a second embodiment. Fig. 17 is a schematic perspective view of a cooling roll in the second embodiment.

As shown in Fig. 16, the production device of this embodiment is provided with a temperature difference reducing mechanism 45. This temperature difference reducing mechanism 45 is a mechanism for reducing, prior to contact of melted resin discharged from the discharge mechanism 38 with each of the sheets 2a and 2d, the temperature difference between the melted resin and each of the sheets 2a and 2d onto which the melted resin is to be discharged by performing at least one of heating of each of the sheets 2a and 2d and cooling of the melted resin. More specifically, in this embodiment, the temperature difference reducing mechanism 45 is a mechanism for performing, prior to contact of melted resin discharged from the discharge mechanism 38 with each of the sheets 2a and 2d, both of heating of each of the sheets 2a and 2d and cooling of the melted resin. However, the temperature difference reducing mechanism 45 may perform only one of heating of each of the sheets 2a and 2d and cooling of the melted resin.

The temperature difference reducing mechanism 45 includes: a cooling roll 44 serving as a cooling mechanism for cooling the melted resin before the contact with each of the sheets 2a and 2d; and a heating mechanism 46. The cooling roll 44 is provided so that the melted resin discharged from the discharge mechanism 38 comes into contact with the outer periphery 44a of the cooling roll 44 before coming into contact with each of the sheets 2a and 2d. The cooling roll 44 is rotatably supported.

Specifically, as shown in Fig. 17, the outer periphery 44a of the cooling roll 44 has a plurality of carrying channels 44b formed along the circumferential direction. The melted resin is guided into and carried by these carrying channels 44b.

The heating mechanism 46 is a mechanism for heating each of the sheets 2a and 2d before the contact with the melted resin. In this embodiment, the heating mechanism 46 includes first to fourth hot-air blowing mechanisms 41, 42, 47, and 48. The first and second hot-air blowing mechanisms 41 and 42 are mechanisms for heating the base sheet 2a. More specifically, the first hot-air blowing mechanism 41 is a mechanism for heating the base sheet 2a by blowing hot air onto one of the surfaces of the base sheet 2a, and the second hot--air blowing mechanism 42 is a mechanism for heating the base sheet 2a by blowing hot air onto the other surface of the base sheet 2a. The third and fourth hot-air blowing mechanisms 47 and 48 are mechanisms for heating the sheet 2d. More specifically, the third hot-air blowing mechanism 47 is a mechanism for heating the sheet 2d by blowing hot air onto one of the surfaces of the sheet 2d, and the fourth hot-air blowing mechanism 48 is a mechanism for heating the sheet 2d by blowing hot air onto the other surface of the sheet 2d.

The production device of this embodiment is provided with first to fourth ionized-air blowing mechanisms 43a, 43b, 49a, and 49b serving as destaticizing mechanisms. The first ionized-air blowing mechanism 43a is a mechanism for destaticizing the base sheet 2a prior to the contact of the molten resin discharged from the discharge mechanism 38 with the base sheet 2a by blowing ionized air onto one of the surfaces of the base sheet 2a. The second ionized-air blowing mechanism 43b is a mechanism for destaticizing the base sheet 2a prior to the contact of the molten resin discharged from the discharge mechanism 38 with the base sheet 2a by blowing ionized air onto the other surface of the base sheet 2a. The third ionized-air blowing mechanism 49a is a mechanism for destaticizing the sheet 2d prior to the contact of the melted resin discharged from the discharge mechanism 38 with the sheet 2d by blowing ionized air onto one of the surfaces of the sheet 2d. The fourth ionized-air blowing mechanism 49b is a mechanism for destaticizing the sheet 2d prior to the contact of the melted resin discharged from the discharge mechanism 38 with the sheet 2d by blowing ionized air onto the other surface of the sheet 2d.

In this embodiment, in feeding the base sheet 2a, the control unit 40 drives the first and second hot-air blowing mechanisms 41 and 42 to blow hot air onto both surfaces of the base sheet 2a, thereby heating the base sheet 2a. Also in feeding the sheet 2d, the control unit 40 drives the third and fourth hot-air blowing mechanisms 47 and 48 to blow hot air on both surfaces of the sheet 2d, thereby heating the sheet 2d. Furthermore, in the spacer forming step, the melted resin discharged from the discharge mechanism 38 is carried along the carrying channels 44b formed in the outer periphery of the cooling roll 44 to the top of the base sheet 2a. In this manner, in this embodiment, prior to the contact of the molten resin discharged from the discharge mechanism 38 with each of the sheets 2a and 2d, the temperature difference reducing mechanism 45 reduces the temperature difference between the melted resin and each of the sheets 2a and 2d. Therefore, the sheet 2a and 2d are less likely to be deformed when the melted resin comes into contact with the sheets 2a and 2d. Consequently, the deterioration in the flatness of the sheets 2a and 2d can be prevented, whereby a light-transmitting and heat-insulating material 2 with a high aesthetic quality can be produced.

Particularly in this embodiment, since the cooling roll 44 for cooling the molten resin and the first to fourth hot-air blowing mechanisms 41, 42, 47, and 48 for heating the sheets 2a and 2d are concurrently provided, the temperature difference between the molten resin and each of the sheets 2a and 2d can be further reduced. Therefore, the deterioration in the flatness of the sheets 2a and 2d can be more effectively prevented. However, it may not necessarily be needed to provide both of the cooling mechanism and the heating mechanism. At least one of the cooling mechanism and the heating mechanism may be provided.

Furthermore, in this embodiment, the outer periphery 44a of the cooling roll 44 is provided with carrying channels 44b so that the molten resin pass through the carrying channels 44b. Therefore, the melted resin is efficiently cooled, so that the temperature difference between the molten resin and each of the sheets 2a and 2d can be further reduced. In addition, the melted resin can be prevented from fluctuating, so that the resin spacers 2c can be effectively prevented from meandering.

In this embodiment, in the step of feeding the base sheet 2a, the control unit 40 drives the first and second ionized-air blowing mechanisms 43a and 43b to blow ionized air onto both surfaces of the base sheet 2a, thereby destaticizing the base sheet 2a. Also in the sheet stacking step, the control unit 40 drives the third and fourth ionized-air blowing mechanisms 49a and 49b to blow ionized air on both surfaces of the sheet 2d, thereby destaticizing the sheet 2d. In this manner, in this embodiment, prior to the contact of the molten resin discharged from the discharge mechanism 38 with each of the sheets 2a and 2d, the destaticizing mechanism destaticizes each of the sheets 2a and 2d. Particularly in this embodiment, the first to fourth ionized-air blowing mechanisms 43a, 43b, 49a, and 49b destaticize both surfaces of each of the sheets 2a and 2d. Therefore, the destaticization of the sheets 2a and 2d can be more reliably achieved. Thus, it is effectively prevented that the melted resin fluctuates owing to static electricity charged on the sheets 2a and 2d. Hence, the resin spacers 2c can be reliably formed in a straight line shape. Consequently, the light-transmitting and heat--insulating material 2 can be produced with a high yield.

Furthermore, in this embodiment, the destaticization of each of the sheets 2a and 2d is performed prior to the contact thereof with the table 10. Therefore, the sheets 2a and 2d can be placed at an accurate position on the table 10. Thus, the resin spacers 2c can be formed at accurate positions with respect to the sheets 2a and 2d.

As the sheet stacking step is repeated, the height of the uppermost sheet 2d gradually increases. Therefore, after every sheet stacking step, the control unit 40 drives an elevating mechanism 39 to gradually elevate the position of the sheet feeding mechanism 32. Thus, the distance between the sheet feeding mechanism 32 and the uppermost sheet 2d can be kept constant.

Moreover, in this embodiment, a heater 33b is disposed in the vicinity of the discharge nozzles 33. This heater 33b heats the discharge nozzles 33 to keep them at a predetermined temperature or more. Thus, the melted resin is allowed to smoothly flow out of the discharge nozzles 33. No particular limitation is placed on the type of the heater 33b; for example, it can be composed of a heating wire, an infrared radiation mechanism, or a hot-air discharge mechanism.

In the above method for producing the light-transmitting and heat-insulating material 2, as shown in Fig. 18, the melted resin must be intermittently discharged from the discharge mechanism 38. Therefore, the control unit 40 intermittently drives the pressure pump 54. In this case, the flow rate of melted resin discharged from the discharge mechanism 38 reduces immediately after the start of discharge and immediately before the end of discharge. Thus, portions of each resin spacer 2c formed by molten resin immediately after the start of discharge and immediately before the end of discharge will be narrower than the other portion. Therefore, the portions of the produced light- transmitting and heat-insulating material 2 in which the portions of the resin spacers 2c composed of molten resin immediately after the start of discharge and immediately before the end of discharge are formed should preferably be cut out later. In this case, the stacked positions of the sheets 2a may be gradually shifted in the direction x.

### (Other Modifications)

The above second embodiment describes an example in which the sheets 2a and 2d are destaticized prior to the placement thereof on the table 10. However, the present invention is not limited to the above example. For example, a destaticizing mechanism may be disposed above the table 10 to destaticize each of the sheets 2a and 2d placed on the table 10.

The drive mechanism 11 may be a mechanism in which a conveyance belt is used. In this case, the table 10 can be driven at a higher speed. Therefore, the productivity of the light-admitting and heat-insulating material 2 can be increased.

The above embodiment describes an example in which two rolls 30a and 32a are disposed as sources of resin sheet supply; however, three or more sources of resin sheet supply may be provided. In such a case, for example, even when one of the sources of supply runs out of the resin sheet, a resin sheet can be supplied from another source of supply, so that the production can be continued without the deactivation of the production device. In addition, the provision of three or more sources of resin sheet supply can increase the number of producible variations in sheet structure.

### (Examples 1 and 2)

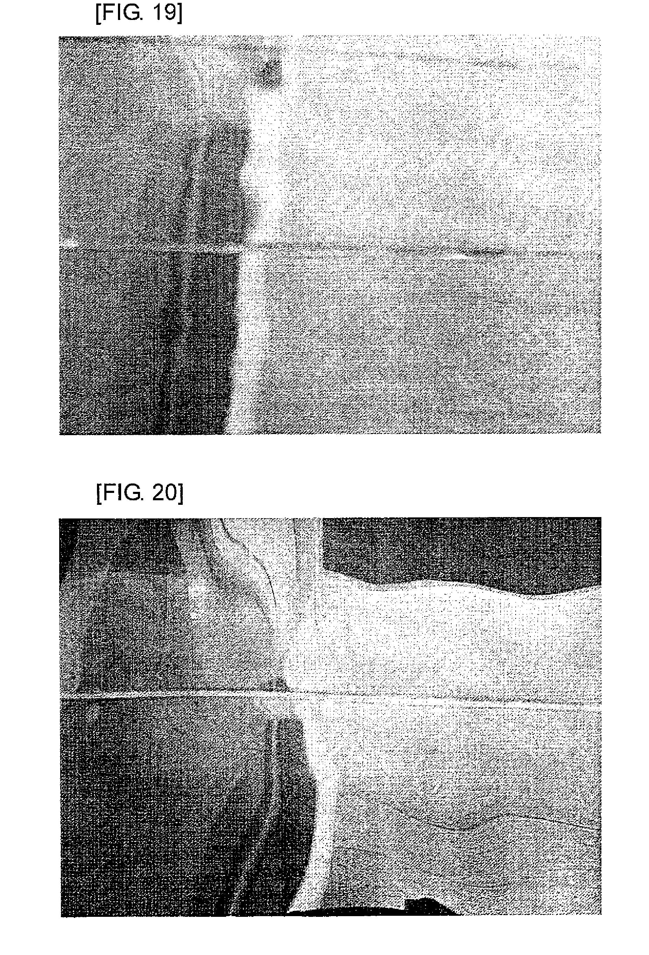

A light- transmitting and heat-insulating material was produced using a production device having the same structure as that of the second embodiment except that the first to fourth hot-air blowing mechanisms 41, 42, 47, and 48 were not provided. In producing the light-transmitting and heat-insulating material, a 50 pm thick PET sheet was used as a sheet 2a. The traveling speed of the table 10 was 30 m/min. The diameter of the melted resin was 0.7 mm. The temperature of melted resin discharged from the discharge mechanism 38 was 170°C. The temperature of the cooling roll 44 was 11°C. The length of melted resin located between each discharge nozzle 33 and the contact point of melted resin with the cooling roll 44 was 1.7 mum. The length of the portion of melted resin in contact with the cooling roll 44 was 314 mm. A photograph in plan view of the light-transmitting and heat-insulating material obtained in Example 1 is shown in Fig. 19.

Furthermore, a light- transmitting and heat--insulating material was produced as Example 2 in the same manner as in Example 1 and using a production device having the same structure as that used in the above Example 1 except that the cooling roll 44 was not provided. In Example 2, the distance of melted resin from the tip of each discharge nozzle 33 to the contact point with the sheet 2a was 220 mem. A photograph in plan view of the light-transmitting and heat-insulating material obtained in Example 2 is shown in Fig. 20.

In Example 1 in which the melted resin was cooled in advance using the cooling roll 44, the temperature of the melted resin immediately before the contact with the sheet 2a was 118°C. On the other hand, in Example 2 in which the melted resin was not cooled in advance, the temperature of the melted resin immediately before the contact with the sheet 2a was 165°C. These results show that with the use of the cooling roll 44, the temperature of the melted resin immediately before the contact with the sheet 2a can be reduced to reduce the temperature difference between the sheet 2a and the melted resin. In Example 2 in which the temperature difference between the sheet 2a and the melted resin was large, the reflection image was largely distorted as shown in Fig. 20, which shows that the sheet 2a was deformed. On the other hand, in Example 1 in which the temperature difference between the sheet 2a and the melted resin was small, the reflection image was less distorted as shown in Fig. 19, which shows that the sheet 2a did not cause a large deformation. These results reveal that by reducing the temperature difference between the sheet 2a and the melted resin upon contact with the sheet 2a, the deformation of the sheet 2a can be reduced, whereby a light- transmitting and heat-insulating material having an excellent aesthetic quality can be produced.

### (Examples 3 and 4)

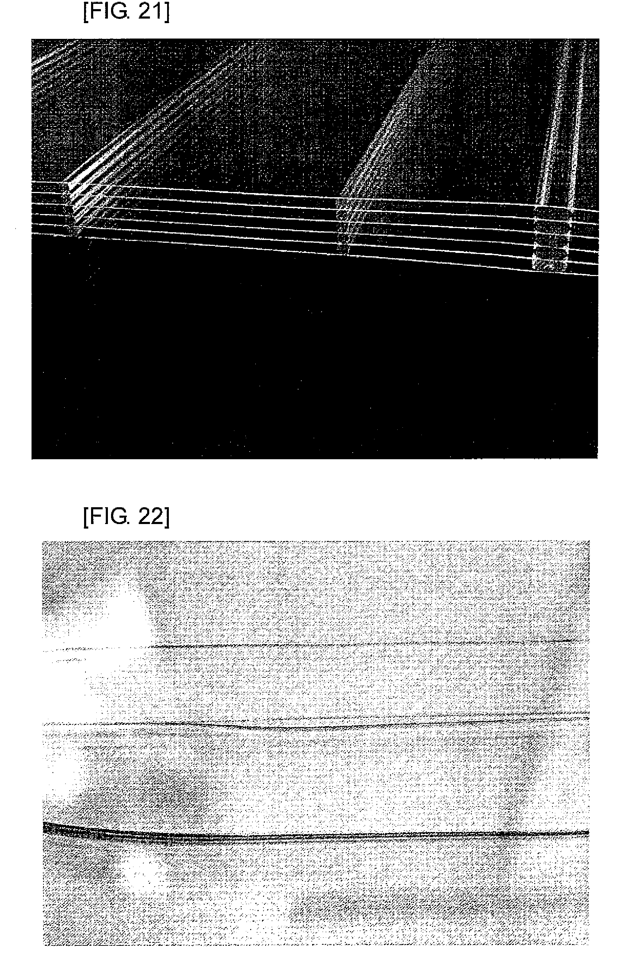

In Example 3, a light- transmitting and heat-insulating material was produced using the production device of the second embodiment and by driving the destaticizing mechanism. In Example 4, a light- transmitting and heat-insulating material was produced using the same production device as in Example 3 but without driving the destaticizing mechanism. A photograph in perspective view of the light-transmitting and heat-insulating material obtained in Example 3 is shown in Fig. 21. A photograph in plan view of the light- transmitting and heat-insulating material obtained in Example 4 is shown in Fig. 22. In the above Examples 3 and 4, a PET sheet was used as a sheet 2a.

As shown in Fig. 21, in Example 3 in which the destaticizing mechanism was driven, no fluctuation of resin spacers 2c was observed, so that straight-line resin spacers 2c could be reliably formed. In contrast, in Example 4 in which the destaticizing mechanism was not driven, fluctuation occurred in resin spacers 2c, so that straight-line resin spacers 2c could not reliably be formed. These results reveal that by destaticizing the sheet 2a prior to the contact of the melted resin discharged from the discharge mechanism 38 with the sheet 2a, fluctuation of resin spacers 2c can be prevented, so that straight-line resin spacers 2c can be reliably formed.

### Reference Signs List

- 1: Production device
- 2: Light- transmitting and heat-insulating material
- 2a: Base sheet
- 2b: Structure
- 2c: Resin spacer
- 2d: Sheet
- 10: Table
- 10a: Table surface
- 11: Drive mechanism
- 12: Holding region
- 12a: First end portion of holding region
- 12b: Second end portion of holding region
- 13: Table body
- 14, 15: Suction member
- 14a, 15a: Suction member body
- 14b, 15b, 16b: Porous material
- 14c, 15c: Communication hole
- 17: Pressure reducing pump
- 18, 19, 23, 24: Solenoid valve
- 20: Positive-pressure generating mechanism
- 21: Compression pump
- 22: Ion supply mechanism
- 25: Holding mechanism
- 30: Base sheet feeding mechanism
- 30a: Roll
- 30b to 3Df: Conveyor roll
- 31: Formation mechanism
- 32: Sheet feeding mechanism
- 32a: Roll
- 32b to 32f: Conveyor roll
- 33: Discharge nozzle
- 33b: Heater
- 34, 36: Suction mechanism
- 35, 37: Cutter
- 38: Discharge mechanism
- 39: Elevating mechanism
- 40: Control unit
- 41: First hot-air blowing mechanism
- 42: Second hot-air blowing mechanism
- 47: Third hot-air blowing mechanism
- 48: Fourth hot-air blowing mechanism
- 43a: First ionized-air blowing mechanism
- 43b: Second ionized-air blowing mechanism
- 44: Cooling roll
- 44a: Outer periphery of cooling roll
- 44b: Carrying channel
- 45: Temperature difference reducing mechanism
- 46: Heating mechanism
- 49a: Third ionized-air blowing mechanism
- 49b: Fourth ionized-air blowing mechanism
- 50: Hot melt machine
- 50a: Melting chamber
- 51: Pressure reducing mechanism
- 52: Gas supply mechanism
- 53: Pipe
- 54: pressure pump

## Claims

1. A device for producing a sheet structure including a flexible sheet and a structure formed on the sheet, the sheet structure production device comprising:
a table having in a surface thereof a holding region on which the sheet is to be held;
a formation mechanism for forming the structure on the sheet held on the holding region;
a holding mechanism for holding the sheet on the holding region; and
a control unit,
wherein the holding mechanism includes:
a porous material at least partly located within the holding region and provided in the table so that a surface thereof is flush with the surface of the table, the porous material having interconnected cells;
a negative-pressure generating mechanism for giving the porous material a negative pressure; and
a positive-pressure generating mechanism for giving the porous material a positive pressure, and
the control unit allows the negative-pressure generating mechanism to generate a negative pressure to hold the sheet, then allows the formation mechanism to form the structure, and then allows the positive-pressure generating mechanism to generate a positive pressure.

2. The sheet structure production device according to claim 1, wherein the porous material comprises: a first porous material at least partly disposed in a first end portion of the holding region located on one side thereof as viewed in a first direction; and a second porous material at least partly disposed in a second end portion of the holding region located on the other side thereof as viewed in the first direction.

3. The sheet structure production device according to claim 2, wherein
each of the first and second porous materials has an elongated shape, and
each of the first and second porous materials is disposed along a second direction.

4. The sheet structure production device according to claim 2 or 3, wherein
the plan shape of the sheet is a rectangular shape whose longitudinal direction extends along the first direction,
the first end portion is an end portion of the holding region on one side thereof as viewed in the lengthwise direction of the holding region, and
the second end portion is an end portion of the holding region on the other side thereof as viewed in the lengthwise direction thereof.

5. The sheet structure production device according to any one of claims 2 to 4, wherein the porous material further comprises at least one of the third porous materials disposed in an area of the holding region located between the first end portion and the second end portion.

6. The sheet structure production device according to any one of claims 1 to 5, wherein the porous material is made of porous carbon.

7. The sheet structure production device according to any one of claims 1 to 6, wherein the porosity of the porous material is within the range of 10% to 50% by volume.

8. The sheet structure production device according to any one of claims 1 to 7, wherein the sheet is a resin sheet.

9. The sheet structure production device according to any one of claims 1 to 8, wherein the positive--pressure generating mechanism is a mechanism for supplying compressed ionized air to the porous material.

10. The sheet structure production device according to any one of claims 1 and 6 to 9, wherein
the porous material comprises a plurality of porous materials, and
the plurality of porous materials are arranged in a matrix pattern in the table.

11. The sheet structure production device according to claim 10, wherein the plurality of porous materials are arranged in a matrix pattern having as basis vectors a first vector and a second vector inclined to the first vector.

12. The sheet structure production device according to any one of claims 1 to 11, wherein
the flexible sheet is a resin sheet,
the structure includes the several plastic sheets stacked one on top of another with a resin spacer interposed therebetween, and
the formation mechanism includes: a discharge mechanism for forming the resin spacer by discharging melted resin onto the plastic sheet; and a stacking mechanism for stacking the plastic sheets, one above another on which the resin spacer is formed.

13. The sheet structure production device according to claim 12, wherein the formation mechanism further includes a temperature difference reducing mechanism for reducing, prior to contact of the molten resin discharged from the discharge mechanism with the plastic sheet, the temperature difference between the melted resin and the plastic sheet onto which the melted resin is to be discharged by performing at least one of heating of the plastic sheet and cooling of the melted resin.

14. The sheet structure production device according to claim 13, wherein the temperature difference reducing mechanism includes a cooling mechanism for cooling the melted resin.

15. The sheet structure production device according to claim 14, wherein the cooling mechanism is a cooling roll provided so that the melted resin discharged from the discharge mechanism comes into contact with the outer periphery of the cooling roll before coming into contact with the plastic sheet.

16. The sheet structure production device according to claim 15, wherein the outer periphery of the cooling roll has a carrying channel formed to extend along the circumferential direction of the cooling roll and carry the melted resin therethrough.

17. The sheet structure production device according to any one of claims 13 to 16, wherein the temperature difference reducing mechanism includes a heating mechanism for heating the plastic sheet onto which the molten resin is to be discharged.

18. The sheet structure production device according to claim 17, wherein the heating mechanism is a hot-air blowing mechanism for blowing hot air onto the plastic sheet onto which the melted resin is to be discharged.

19. The sheet structure production device according to any one of claims 12 to 18, wherein
the sheet structure is a light-transmitting and heat-insulating material in which the several resin spacers are formed in parallel with each other and the plastic sheet is a light-permeable sheet, and
the sheet structure production device further comprises a destaticizing mechanism for destaticizing the light-permeable sheet prior to the contact of the melted resin discharged from the discharge mechanism with the light-permeable sheet.

20. The sheet structure production device according to claim 19, wherein the destaticizing mechanism includes an ionized-air blowing mechanism for blowing ionized air onto the light-permeable sheet.

21. The sheet structure production device according to claim 20, wherein the ionized--air blowing mechanism is configured to blow ionized air onto the light--permeable sheet prior to the contact of the light-permeable sheet fed from the stacking mechanism with the table.

22. The sheet structure production device according to claim 20 or 21, wherein the ionized-air blowing mechanism comprises: a first ionized-air blowing mechanism for blowing ionized air onto one of the surfaces of the light-permeable sheet; and a second ionized-air blowing mechanism for blowing ionized air onto the other surface of the light-permeable sheet.

23. A sheet structure production method using the sheet structure production device according to any one of claims 1 to 22, the method comprising the steps of:
holding the sheet on the holding region of the table by giving the porous material a negative pressure by means of the negative-pressure generating mechanism;
with the sheet held on the holding region by giving the porous material the negative pressure by means of the negative--electrode generating mechanism, forming the structure on the held sheet by means of the formation mechanism to obtain the sheet structure; and
while or after the porous material is given a positive pressure by the positive-pressure generating mechanism, removing the sheet structure from the table.

24. The sheet structure production method according to claim 23, wherein
the flexible sheet is a resin sheet,
the structure includes the several plastic sheets stacked one on top of another with a resin spacer interposed therebetween, and
the step of forming the structure comprises: a spacer forming step of forming the resin spacer by discharging melted resin onto the sheet; and a sheet stacking step of stacking the sheets, one above another on which the resin spacer is formed.

25. The sheet structure production method according to claim 24, wherein in the spacer forming step and prior to contact of the discharged melted resin with the sheet, the temperature difference between the melted resin and the sheet onto which the melted resin is to be discharged is reduced by performing at least one of heating of the sheet and cooling of the melted resin.

26. The sheet structure production method according to claim 24 or 25, wherein
the sheet structure is a light-transmitting and heat-insulating material in which the several resin spacers are formed in parallel with each other and the resin sheet is a light-permeable sheet, and
the step of forming the structure comprises forming the resin spacer by discharging the melted resin onto the light-permeable sheet after destaticizing the light-permeable sheet.
